# EUROPÄISCHE PATENTSCHRIFT

(11) **EP 3 145 873 B1**
(45) Veröffentlichungstag und Bekanntmachung des Hinweises auf die Patenterteilung: **11.09.2019**
(21) Anmeldenummer: 15723520.1
(22) Anmeldetag: 20.05.2015
(51) Int. Cl.: C02F 1/26, C02F 1/469, C22B 3/00, B01D 11/00, B09B 3/00, B09C 1/02, B09B 5/00, C02F 11/00, C02F 1/52, C02F 1/42, C02F 1/46, C02F 103/16, C02F 103/10, C02F 101/20, C02F 1/04

(54) **VERFAHREN ZUM BEHANDELN VON FESTSTOFFEN UND FLÜSSIGKEITEN, SOWIE BELASTETEM ERDREICH UND GEWÄSSERN**
METHOD FOR THE TREATMENT OF SOLIDS AND LIQUIDS, AND OF CONTAMINATED SOIL AND BODIES OF WATER
PROCÉDÉ DE TRAITEMENT DE SOLIDES ET DE LIQUIDES AINSI QUE DE SOLS ET D'EAUX CONTAMINÉS

(30) Priorität: 20.05.2014 DE 102014007294
(43) Veröffentlichungstag der Anmeldung: 29.03.2017
(73) Patentinhaber: Pommersheim, Rainer, 55116 Mainz (DE)
(72) Erfinder: Pommersheim, Rainer, 55116 Mainz (DE)
(74) Vertreter: Kruspig, Volkmar
(86) Internationale Anmeldenummer: PCT/EP2015/061139
(87) Internationale Veröffentlichungsnummer: WO 2015/177225

(56) Entgegenhaltungen:
- WO-A1-99/14160
- WO-A1-2014/058312
- CN-A- 102 643 988
- DE-A1-102011 080 230
- US-A1- 2011 155 635
- HSU S C N ET AL: "Extracting Cu(II) from aqueous solutions with hydrophobic room-temperature ionic liquid in the presence of a pyridine-based ionophore to attempt Cu recovery: A laboratory study", ELECTROCHIMICA ACTA, ELSEVIER SCIENCE PUBLISHERS, BARKING, GB, Bd. 54, Nr. 6, 15. Februar 2009 (2009-02-15), Seiten 1744-1751, XP025882366, ISSN: 0013-4686, DOI: 10.1016/J.ELECTACTA.2008.09.068 [gefunden am 2008-10-15]
- JINGYING MA ET AL: "Application of ionic liquids in organic pollutants control", JOURNAL OF ENVIRONMENTAL MANAGEMENT, ACADEMIC PRESS, LONDON, GB, Bd. 99, 14. Januar 2012 (2012-01-14), Seiten 104-109, XP028403581, ISSN: 0301-4797, DOI: 10.1016/J.JENVMAN.2012.01.013 [gefunden am 2012-01-19]

## Beschreibung

Die Erfindung bezieht sich auf eine Methode zum Behandeln von Feststoffen und Flüssigkeiten sowie belastetem Erdreich oder Sand mit dem Ziel, diese zu säubern und daraus Metalle oder Metallverbindungen zurückzugewinnen. Als Ausgangsmaterialen kommen insbesondere belastetestes Erdreich oder Abwässer in Frage, es können aber auch feste oder flüssige Industrieabfälle, Recyclingmaterialien usw. sein. Die Erfindung beschreibt einen einheitlichen, technischen Prozess und stützt sich auf die besonderen Eigenschaften so genannter ionischer Flüssigkeiten, wie z.B. ihre gute Leitfähigkeit und ihr besonderes Lösungsverhalten gegenüber Metallen und anderen Feststoffen. Die ionischen Flüssigkeiten gehen in dem Prozess nicht verloren. Die wiedergewonnenen Metalle und evtl. anderen Stoffe sind von hoher Reinheit und Qualität. Sie können anschließend wie konventionell gewonnene Rohstoffe verwendet und weiterverarbeitet werden.

In Zeiten immer knapper werdenden Ressourcen gewinnt die Rückgewinnung wertvoller Rohstoffe immer mehr an Bedeutung. Metalle spielen hierbei eine wichtige Rolle. Besonders interessant sind dabei Edelmetalle wie beispielsweise Gold, Platin, Rhodium usw., die sowohl in Minenabwässern, belastetem Erdreich aber auch in Industrieprodukten wie beispielsweise Katalysatoren von Fahrzeugen, oder in chemischen Prozessen vorkommen können.

Einen besonderen Stellenwert nimmt die Rückgewinnung von Metallen aus Lösungen und Abwässern der Galvanotechnik ein. Hier fallen große Mengen an belasteten Wasser an, Dieses Abwasser enthält einen hohen Anteil an metallischen Verbindungen, so dass eine Rückgewinnung der Metallen in jedem Fall notwendig und wirtschaftlich sinnvoll ist.

Derzeit ist eine Reihe von industriellen Prozessen bekannt, die zur Rückgewinnung solcher Metalle im großtechnischen Maßstab eingesetzt werden. Diese gliedern sich in mehrere Grundbereiche: Elektrochemische Prozesse, Prozesse unter Verwendung von Ionenaustauschern, sowie eine Kombination dieser beiden Verfahren in einem Prozess. Derlei Verfahren sind an vielen Stellen in der Fachliteratur beschrieben. Auch gibt es eine Reihe kommerzieller Anlagen, die diese Verfahren nutzen. Sie können von kleinen Laborgeräten bis hin zu großen Industrieanlagen reichen.

Stellvertretend dafür werden nachfolgend einige Literaturstellen benannt, die solche Verfahren zum Gegenstand haben.

Die Patentschrift DE 37 32177 A1 beschreibt beispielsweise ein Verfahren zur Rückgewinnung von Metallen aus Metall-Kunststoffabfällen unter Verwendung von verbrauchten Lösungen der Elektrotechnikindustrie. Bei dem hier beschriebenen Prozess wird in einem ersten Schritt die Metall-Kunststoffabfälle erhitzt wobei das Metall vom Kunststoff getrennt wird. Anschließend wird das Metall in Ätz- beziehungsweise Waschlösungen gelöst und anschließend in ein Sulfat überführt. Dies geschieht durch eine Behandlung mit Ionenaustauschern. Die selektive Abscheidung der Metalle aus der Lösung erfolgt elektrolytisch und der Ionenaustauscher wird unter Rückbildung der wiederverwendbaren Ätzlösung regeneriert.

Die in der Offenlegungsschrift DE 602 01 404 T2 beschriebene Erfindung befasst sich mit der Rückgewinnung von katalytischen Metallkolloiden aus Fluidzusammensetzungen, die dieses enthalten. Erfindungsgemäß wird dies durch Konzentrieren der Metallkolloide als ein Niederschlag auf einem porösen Metallfilter erreicht, mit anschließendem Entfernen und Löslichmachendes Niederschlags, sowie Rückgewinnen der katalytischen Metalle.

Eine elektrolytische Methode zur Rückgewinnung von Metallen aus photografischen Lösungen wird in der Offenlegungsschrift DE 699 10 315 T2 beschrieben. Hierbei geht es insbesondere um die Rückgewinnung von Silber. Dies wird in einer elektrolytischen Zelle durch das Anlegen einer elektrischen Spannung erreicht, wobei das Metall auf der Kathode abgeschieden wird.

Eine Methode zur Rückgewinnung von beispielweise Eisen oder Aluminium aus Abwasserschlämmen beschreibt die Offenlegungsschrift DE 694 15 325 T2. Erfindungsgemäß wird der Schlamm erst angesäuert und anschließend mit einem Oxydationsmittel wie z.B Wasserstoffperoxyd behandelt. Anschließend wird der so vorbehandelte Schlamm einer flüssig-flüssig Extraktion unterzogen und die Eisen- bzw. Aluminiumionen aus der organischen Phase in einem chemischen Prozess zurückgewonnen.

Ebenfalls mit Peroxyden, speziell Wasserstoffperoxyd arbeitet das Verfahren, das in der Offenlegungsschrift DE 601 00 804 T2 beschrieben wird. Hier werden mit Kohlenwasserstoffen verseuchte Böden oder Sand mit der Peroxydlösung gemischt. Dabei werden die flüssigen Kohlenwasserstoffe herausgewaschen. Man erhält ein Gemisch aus drei Phasen: einer organischen Phase, die fast ausschließlich aus den flüssigen Kohlenwasserstoffen besteht, eine wässrige Phase und die gereinigten Feststoffe wie z.B. Sand. Durch Dekantieren werden diese dann voneinander getrennt.

In den letzten Jahren hat eine neue Stoffgruppe, die so genannten ionischen Flüssigkeiten immer mehr an Bedeutung gewonnen. Unter dem Begriff der ionischen Flüssigkeiten (engl. "ionic liquids") versteht man Flüssigkeiten die ausschließlich aus Ionen aufgebaut sind. Es handelt sich dabei um geschmolzene Salze organischer Verbindungen oder eutektische Gemische von organischen und anorganischen Salzen. In DE 10 2011 080 230 A1 wird eine ionische Flüssigkeit mit einer sehr speziellen Struktur offenbart. Aus WO 2014/058312 A1 ist es bekannt, eine Extraktion von Metallen aus einem Wasser mit ionischen Flüssigkeiten durchzuführen.

Ionische Flüssigkeiten selbst besitzen eine Reihe von ausgezeichneten Eigenschaften: Sie sind nicht flüchtig (vernachlässigbarer Dampfdruck, wie Salze), nur schwer brennbar und thermisch stabil (je nach ausgewählter Flüssigkeit bis über 300°C). Die meisten ionischen Flüssigkeiten sind ungiftig. Für industrielle Anwendungen sind vor allem ihre besonderen Eigenschaften als Lösungsmittel und ihre sehr gute elektrische Leitfähigkeit von Interesse.

Derlei Verbindungen sind auch dazu geeignet bestimmte Malle wie z.B. Platin, Gold oder Rhodium aufzulösen. Auch ist es literaturbekannt, dass man beispielsweise durch Lösen von Edelmetallen wie Platin oder Rhodium in einer ionischen Flüssigkeit, diese als flüssigen Katalysator einsetzen kann.

Stellvertretend hierfür sei ein Aufsatz aus der Fachzeitschrift Angewandte Chemie 2012, 51, 1684-1688 (Wiley VCH) benannt, in dem eine Methode beschrieben wird, mit der Platin in einer ionischen Flüssigkeit gelöst wird.

Ausgehend von diesem Stand der Technik liegt der Erfindung die Aufgabe zu Grunde ein ganzheitliches Verfahren zu beschreiben, mit dessen Hilfe wertvolle Metalle oder Metallverbindungen sowohl aus belastetem Erdreich und Gewässern, wie auch aus Industrieabfällen und Abwässern zurückgewonnen werden können. Die Ausgangssubstrate (Erdreich, Abwässer usw.) werden dabei gereinigt und können in die Natur zurückgeführt werden.

Kerngedanke der Erfindung ist es, die Stoffe die man zurückgewinnen will, wertvolle Metalle oder Metallverbindungen aus einer wässrigen Lösung oder Suspension in einer ionischen Flüssigkeit zu lösen und diese anschließend durch einen elektrolytischen Prozess aus der ionischen Flüssigkeit abzuscheiden.

Der Gegenstand der Erfindung ist in den Ansprüchen 1-7 definiert.

Als ionische Flüssigkeiten kommen hierfür insbesondere Verbindungen des Methyimidaziluim- (MIM), Butymimidazolium- (BMIM) Ethylmethylimidazoilum- (EMIM) Ions usw. in Betracht, wie z.B. -Halogenide, -Sulfate, -Triflate, -Acetate usw. Es können aber auch andere ionische Flüssigleiten eingesetzt werden.

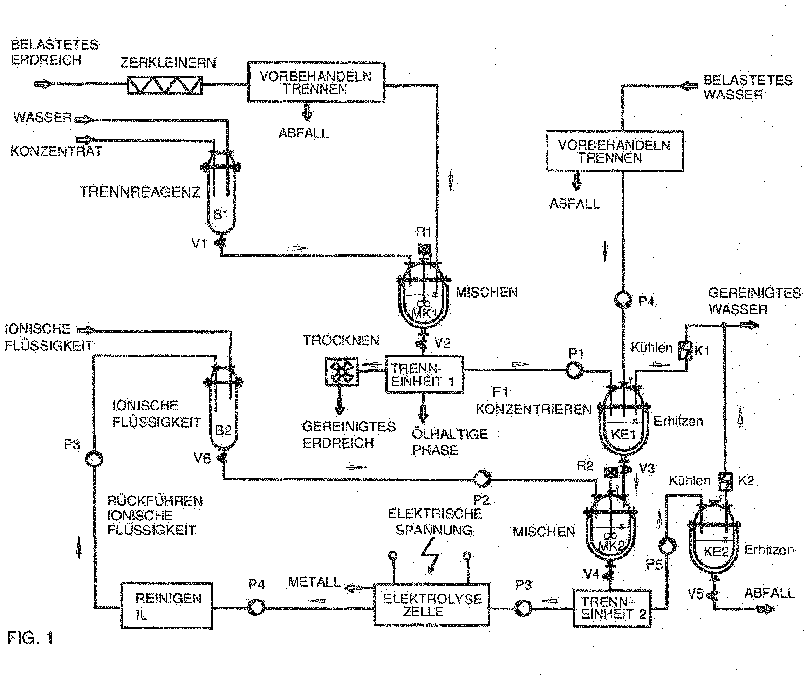

In **Fig. 1** ist ein Prozess dargestellt, der auf den erfindungsgemäßen Überlegungen basiert. Nachfolgend wird er anhand von drei Beispielen kurz erläutert.

Obwohl in den nachfolgenden Beispielen der Schwerpunkt auf der Rückgewinnung bestimmter wertvoller Metalle wie Platin (Pt), Gold (Au), Silber (Ag), Rhodium (Rh) usw. liegt, ist hervorzuheben, dass in ähnlicher Weise, das erfindungsgemäße Verfahren auch zur Entfernung bestimmter Schadstoffe wie Schwermetalle oder radioaktive Elemente aus dem Inputmaterial eingesetzt werden kann. Dabei steht nicht die Rückgewinnung dieser Stoffe im Vordergrund, sondern deren Entfernung aus dem Ausgangsmaterial.

### Beispiel 1:

### Belastetes Wasser:

Das belastete Wasser, das z.B. aus chemischen Prozessen stammt, oder aus Minen oder anderen Bereichen, wird in einem ersten Schritt vorbehandelt und von groben mechanischen Verunreinigungen befreit (VORBEHANDELN TRENNEN). Dies kann durch Grobfilter oder Siebe, aber auch in Sinkbecken geschehen, wo eine Dichtetrennung erfolgt. Die groben mechanischen Verunreinigungen werden als Abfall abgetrennt und einer Entsorgung zugeführt. Ebenfalls hier können auch beispielsweise Öle abgeschieden werden, die eine zweite Phase bilden. Die resultierende Flüssigkeit ist eine Lösung von Metallsalzen oder eine wässrige Suspension von Festoffen mit einer Partikelgröße im Bereich weniger Millimeter, bevorzugt jedoch einiger Mikrometer, die gravimetrisch oder mit Hilfe der Pumpe P4 in die Konzentriereinheit KE1 geleitet wird. Hier wird der Hauptanteil des Wassers beispielsweise durch Erhitzen und Verdunsten sowie anschließenden Kondensation durch Kühlen in K1 aus der Suspension entfernt.

Die so aufkonzentrierte wässrige Flüssigkeit wird in dem Mischgefäß MK2 mit einer geeigneten ionischen Flüssigkeit gemischt (MISCHEN). Diese wird durch die Pumpe P2 aus dem Vorratsgefäß B2 dem Mischgefäß MK2 zugeführt. Hier übergeht das in der Suspension vorhandene und evtl. an den Feststoffpartikeln anhaftende Metall in die ionische Flüssigkeit über und wir darin größtenteils gelöst. Das Ergebnis ist eine Emulsion ionische Flüssigkeit / wässrige Phase aus der in der TRENNEINHEIT 2 die ionische Flüssigkeit angetrennt wird. Da sich die ionische Flüssigkeit mit der wässrigen Phase nicht mischt, bildet sie eine zweite Phase aus, die z.B. gravimetrisch abgetrennt werden kann. Der wässrigen Phase wird z.B. durch Erhitzen in KE2 und anschließendem Abkühlen und Kondensieren in K2 das Wasser entzogen. Der Rückstand wird als Abfall einer Entsorgung zugeführt.

Die ionische Flüssigkeit, die das Metall in gelöster Form enthält, wird ein eine ELEKTROLYSEZELLE geleitet. Durch das Anlegen einer elektrischen Spannung wird das Metall aus der Lösung an einer der Elektroden angeschieden, wobei die ionische Flüssigkeit aufgrund ihrer guten elektrischen Leitfähigkeit als Elektrolyt wirkt. Man erhält das METALL in Reinstform. Die ionische Flüssigkeit wird in einem weiteren Schritt von eventuellen mechanischen oder chemischen Verunreinigungen befreit (REINIGEN IL) und über P3 in den Kreislauf zurückgeführt. Alternativ kann das Abschieden des Metalls aus der ionischen Flüssigkeit auch chemisch, z.B. durch Ausfällen mit anschließender Filtration erfolgen. Hierfür müsste die Elektrolysezelle durch geeignete andere Gefäße ersetzt werden. Eine Kombination beider Möglichkeiten ist auch denkbar.

### Beispiel 2:

### Belastetes Erdreich oder Sand

Handelt es sich bei dem aufzuarbeitenden Material um belastetes Erdreich oder Sand, muss dieses in einem ersten Schritt zerkleinert (ZERKLEINERN) und von groben mechanischen Fremdkörpern wie Steine, Kunststoffe, Holzanteile, sowie ungewünschten Metallstücken befreit werden (VORBEHNANDELN TRENNEN). Der so vorbereitete Input wird anschließend in der Mischkammer MK1 mit einem speziellen, wässrigen Gemisch versetzt, das neben Wasser auch spezifische Trennchemikalien enthält, ähnlich wie in der vorgenannten Offenlegungsschrift DE 601 00 804 T2 beschrieben. Dieses Trennreagenz wird aus einem KONZENTRAT durch Zugaben von WASSER in B1 in Vorfeld zubereitet. Es bewirkt in erster Linie das Abtrennen eventueller vorhandener organischer, ölhaltiger Phasen. Dies geschieht in der TRENNEINHEIT 1, in die in MK1 zubereitete Suspension bzw. Emulsion über V2 gelangt. In der TRENNEINHEIT 1 wird das Gemisch in eine ÖLHALTIGE PHASE und eine wässrige Phase aufgetrennt, sowie eine feste Phase, das GEREINIGTE ERDREICH, welches nach dem TROCKNEN in die Natur zurückgeführt wird. Das Auftrennen in die drei Phasen kann beispielsweise gravimetrisch erfolgen.

Die wässrige Phase, die eine ähnliche Beschaffenheit hat, wie in Beispiel 1 beschrieben und auch feine Feststoffpartikel enthalten kann, wird über P1 oder Gefälle dem Gefäß KE1 zugeführt. Anschließend wird mit ihr wie im Beispiel 1 beschrieben weiter verfahren.

### Beispiel 3:

### Feststoffabfall wie z.B. Metallkatalvsatoren auf Trägermaterialien

Will man wertvolle Metalle, wie z.B. Metallkatalysatoren von Trägermaterialien zurückgewinnen, müssen diese Träger in einem ersten Schritt zerkleinert (ZERKLEINERN) werden. Ebenso verhält es sich bei Elektronikschrott, wie Platinen oder Bauteile, die ebenfalls wertvolle Metalle wie Gold, Platin usw. enthalten können. Bei dem vorliegenden Beispiel wird davon ausgegangen, dass es sich bei den Trägern um ähnliche Strukturen handelt, wie sie in Abgaskatalysatoren von Fahrzeugen eingesetzt werden. Demzufolge können diese entweder aus einem Nichtemetall bestehen, wie z.B. einer Keramik, oder spezielle Metalloberflächen mit einer nichtmetallischen Beschichtung.

In dem darauffolgenden Schritt (VORBEHANDELN TRENNEN) wird der Input wie auch in Beispiel 2 von großen Fremdkörpern befreit. Anschließend kommt das zerkleinerte Material in die Mischkammer MK1. Sofern es sich bei dem Träger um eine Keramik handelt, kann dieser hier noch weiter zerkleinert werden, bis Korngrößen im Millimeter- oder Mikrometerbereich entstehen. Durch ein spezielles Trennreagenz, das aus B1 zugeleitet wird, wird beispielsweise im Falle eines nichtmetallisch beschichteten, metallischen Trägers der nichtmetallische Anteil vom Metall abgewaschen. Das Gemisch, das in beiden Fällen entsteht, wird anschließend in der TRENNEINHEIT 1 aufgetrennt. Eventuell vorhandene nichtkatalytische Metalle, anhaftende Öle, Fett usw. werden aus der wässrigen Phase entfernt.

Die resultierende wässrige Phase ist im Grunde eine Lösung oder Suspension feiner Feststoffpartikel in Wasser, mit einer ähnlichen Beschaffenheit wie im Beispiel 2 und 1 beschrieben. Sie wird über P1 in KE1 geleitet. Anschließend wird mit ihr wird wie in Beispiel 1 bzw. 2 weiter verfahren.

Bei allen drei vorgenannten Beispielen ist es auch denkbar, dass die Metalle nicht aus der ionischen Flüssigkeit entfernt werden, sondern dass diese Lösung so weiterverwendet wird. Handelt es sich bei dem gelösten Metall z.B. um ein Edelmetall wie z. Pt, Pd usw. das als Katalysator eingesetzt werden soll, könnte man die komplette Lösung als Katalysator verwenden. Die ionische Flüssigkeit würde dann im Prozess nicht mehr zurück geführt werden, sondern in ihrer mit dem Edelmetall angereicherten Form als Produkt verkauft werden.

## Patentansprüche

1. Verfahren zum Behandeln von
Feststoffabfall oder belastetem Wasser oder belastetem Erdreich oder Sand mit dem Ziel, diese zu säubern und daraus Metalle oder Metallverbindungen zurückzugewinnen,
**dadurch gekennzeichnet, dass**
das Verfahren folgende Verfahrensschritte aufweist:
- Vorbehandeln des Eingangsmaterials durch Befreien des Eingangsmaterials von groben mechanischen Verunreinigungen beim Behandeln von belastetem Wasser oder durch Zerkleinern und Befreien des Eingangsmaterials von groben mechanischen Fremdkörpern beim Behandeln von Feststoffabfall oder belastetem Erdreich oder Sand;
- Mischen des Eingangsmaterials mit einer Trennflüssigkeit und Trennen des entstandenen Gemischs in eine ölhaltige Phase, eine wässrige Phase sowie eine feste Phase beim Behandeln von Feststoffabfall oder belastetem Erdreich oder Sand;
- Aufkonzentrieren der wässrigen Phase des vorbehandelten Eingangsmaterials;
- Mischen der wässrigen Phase des vorbehandelten Eingangsmaterials mit einer ionischen Flüssigkeit;
- Lösen der Metalle oder Metallverbindungen in der ionischen Flüssigkeit;
- Abtrennen der ionischen Flüssigkeit aus dem wässrigen Gemisch;
- Abscheiden oder Entfernen der Metalle oder Metallverbindungen aus der ionischen Flüssigkeit mittels eines Elektrolysezelle;
- Reinigen der ionischen Flüssigkeit von eventuellen mechanischen und chemischen Verunreinigungen;
- Rückführen der ionischen Flüssigkeit in den Kreislauf.

2. Verfahren nach Anspruch 1,
**dadurch gekennzeichnet, dass**
die Metalle Edelmetalle, insbesondere Pt, Au, Ag, Pd, sind.

3. Verfahren nach Anspruch 1 bis 2,
**dadurch gekennzeichnet, dass**
die verwendete ionische Flüssigkeit, die zum Herauslösen oder Abtrennen der Metalle oder Metallverbindungen verwendet wird, eine Verbindung des Typs A⁺B⁻ ist, die als Kation ein Immidazoliumion, insbesondere Methylimmidazol oder Butylimmidazol, und als Anion ein Halogenid, insbesondere wie Cl⁻ oder Br⁻, oder einen Essigsäurerest, insbesondere ein Acetat, oder ein Triflatanion des Typs CF₃SO₃⁻ enthält oder ein Gemisch aus mehreren ionischen Flüssigkeiten ist.

4. Verfahren nach Anspruch 1 bis 3,
**dadurch gekennzeichnet, dass**
die Metalle oder Metallverbindungen Schwermetalle oder radioaktive Elemente sind.

5. Verfahren nach Anspruch 1 bis 4,
**dadurch gekennzeichnet, dass**
die ionische Flüssigkeit, die das Metall oder die Metallverbindung enthält, als solche verwendet werden kann, insbesondere als Katalysator oder Galvaniklösung.

6. Anlage zum Durchführen eines Verfahrens nach einem der Ansprüche 1 bis 5, **dadurch gekennzeichnet, dass**
sie folgenden Hauptkomponenten aufweist:
- eine Vorbehandlungseinheit [VORBEHANDELN TRENNEN]
- Einheit zum Konzentrieren der wässrigen Phase [KE1]
- Vorlagebehälter für die ionische Flüssigkeit [B2]
- Mischeinheit für die wässrige Phase mit der ionischen Flüssigkeit [MK2]
- eine Trenneinheit zum Abtrennen der ionischen Flüssigkeit [TRENNEINHEIT 2]
- eine Elektrolysezelle zum Abscheiden eines Metalls oder einer Metallverbindung aus der ionischen Flüssigkeit [ELEKTROLYSEZELLE] Einheit zum Reinigen der ionischen Flüssigkeit,wobei die Anlage beim Behandeln von Feststoffabfall oder belastetem Erdreich oder Sand außerdem aufweist:
- Zerkleinerungseinheit [ZERKLEINERN], und nach dem Vorbehandeln
- Vorlagebehälter für eine Trennflüssigkeit [B1],
- Mischeinheit für einen Feststoff [MK1],
- eine Trenneinheit für ein Feststoff-Trennflüssigkeit-Gemisch [TRENNEINHEIT 1],
- einen Trockner für Feststoff.

7. Anlage nach Anspruch 6, **dadurch gekennzeichnet, dass**
die Anlage Wärmetauscher [K1, 2...] und Pumpen [P1, 2...] aufweist.

## Claims

1. A method for treating solid waste or contaminated water or contaminated soil or sand with the aim of cleaning them and recover metals or metal compounds therefrom,
**characterized in that**
the method comprises the method steps of:
- pretreating the incoming material by liberating the incoming material from coarse mechanical impurities, when contaminated water is treated, or by crushing and liberating the incoming material from coarse mechanical foreign bodies, when solid waste or contaminated soil or sand is treated;
- mixing the incoming material with a separating liquid, and separating the developed mixture into an oil-containing phase, an aqueous phase and a solid phase, when solid waste or contaminated soil or sand is treated;
- concentrating the aqueous phase of the pretreated incoming material;
- mixing the aqueous phase of the pretreated incoming material with an ionic liquid;
- dissolving the metals or metal compounds in the ionic liquid;
- separating the ionic liquid from the aqueous mixture;
- eliminating or removing the metals or metal compounds from the ionic liquid by means of an electrolysis cell;
- purifying the ionic liquid from possible mechanical and chemical impurities;
- returning the ionic liquid into the circuit.

2. The method according to claim1,
**characterized in that**
the metals are noble metals, in particular Pt, Au, Ag, Pd.

3. The method according to claims 1 to 2,
**characterized in that**
the employed ionic liquid used for eluting or separating the metals or metal compounds is a compound of the type A⁺B⁻, which as a cation contains an imidazolium ion, in particular methyl imidazole or butyl imidazole, and as an anion contains a halide, in particular such as Cl⁻ or Br⁻ or an acidic acid residue, in particular an acetate, or a triflate anion of the type CF₃SO₃, or is a mixture of several ionic liquids.

4. The method according to claims 1 to 3,
**characterized in that**
the metals or metal compounds are heavy metals or radioactive elements.

5. The method according to claims 1 to 4,
**characterized in that**
the ionic liquid containing the metal or metal compound can be used as such, in particular as a catalyst or galvanic solution.

6. An installation for carrying out a method according to any one of claims 1 to 5,
**characterized in that**
the installation has the following main components:
- a pretreatment unit [PRETREATING SEPARATING],
- a unit for concentrating the aqueous phase [KE1],
- a storage tank for the ionic liquid [B2],
- mixing unit for mixing the aqueous phase with the ionic liquid [MK2],
- a separating unit for separating the ionic liquid [SEPARATING UNIT 2],
- an electrolysis cell for eliminating a metal or a metal compound from the ionic liquid [ELECTROLYSIS CELL],
- a unit for purifying the ionic liquid,
wherein, when solid waste or contaminated soil or sand is treated, the installation moreover has:
- a crushing unit [CRUSHING], and after the pretreating process
- a storage tank for a separating liquid [B1],
- a mixing unit for a solid substance [MK1],
- a separating unit for a mixture of solid substance and separating liquid [SEPARATING UNIT 1],
- a dryer for the solid substance.

7. The installation according to claim 6,
**characterized in that**
the installation comprises heat exchangers [K1, 2 ...] and pumps [1, 2 ...].

## Revendications

1. Procédé pour le traitement de déchets solides ou d'eau contaminée ou de terre ou de sable contaminé(e), ayant pour but de les purifier et d'en récupérer des métaux ou des composés métalliques,
**caractérisé en ce que**
le procédé comprend les étapes suivantes :
- prétraiter le matériau de départ par libération du matériau de départ vis-à-vis des impuretés mécaniques grossières lors du traitement d'eau contaminée ou par fragmentation et libération du matériau de départ vis-à-vis des corps étrangers mécaniques grossiers lors du traitement de déchets solides ou de terre ou de sable contaminé(e) ;
- mélanger le matériau de départ avec un liquide de séparation et séparer le mélange obtenu pour donner une phase contenant de l'huile, une phase aqueuse et une phase solide lors du traitement de déchets solides ou de terre ou de sable contaminé(e) ;
- concentrer la phase aqueuse du matériau de départ prétraité ;
- mélanger la phase aqueuse du matériau de départ prétraité avec un liquide ionique ;
- dissoudre les métaux ou les composés métalliques dans le liquide ionique ;
- séparer le liquide ionique hors du mélange aqueux ;
- déposer ou enlever les métaux ou les composés métalliques hors du liquide ionique à l'aide d'une cellule d'électrolyse ;
- purifier le liquide ionique vis-à-vis des impuretés mécaniques et chimiques éventuelles ;
- retourner le liquide ionique dans le circuit.

2. Procédé selon la revendication 1,
**caractérisé en ce que**
les métaux sont des métaux précieux, en particulier Pt, Au, Ag, Pd.

3. Procédé selon l'une des revendications 1 à 2,
**caractérisé en ce que**
le liquide ionique utilisé pour dissoudre ou séparer les métaux ou les composés métalliques est un composé de type A⁺B⁻ qui contient à titre de cation un ion d'imidazole, en particulier un méthylimidazole ou butylimidazole, et à titre d'anion un halogénure, en particulier Cl⁻ ou Br⁻, ou un radicale d'acide acétique, en particulier un acétate, ou un anion de triflate de type CF₃SO₃- ou un mélange de plusieurs liquides ioniques.

4. Procédé selon la revendication 1 à 3,
**caractérisé en ce que**
les métaux ou les composés métalliques sont des métaux lourds ou des éléments radioactifs.

5. Procédé selon la revendication 1 à 4,
**caractérisé en ce que**
le liquide ionique qui contient le métal ou le composé métallique peut être utilisé tel quel, en particulier à titre de catalyseur ou de solution galvanique.

6. Installation pour mettre en oeuvre un procédé selon l'une des revendications 1 à 5,
**caractérisée en ce que**
elle comprend les composants principaux suivants :
- une unité de prétraitement [PRÉTRAITER SÉPARER],
- une unité pour concentrer la phase aqueuse [KE1],
- un récipient de réserve pour le liquide ionique [B2],
- une unité de mélange pour la phase aqueuse avec le liquide ionique [MK2],
- une unité de séparation pour séparer le liquide ionique [UNITÉ DE SÉPARATION 2],
- une cellule d'électrolyse pour déposer un métal ou un composé métallique hors du liquide ionique [CELLULE D'ÉLECTROLYSE],
- une unité pour purifier le liquide ionique,
l'installation comprenant en outre, pendant le traitement des déchets solides ou de la terre ou du sable contaminé(e):
- une unité de fragmentation [FRAGMENTER], et après le prétraitement :
- un récipient de réserve pour un liquide de séparation [B1],
- une unité de mélange pour des solides [MK1],
- une unité de séparation pour un mélange solide-liquide de séparation [UNITÉ DE SÉPARATION 1],
- un sécheur pour les solides.

7. Installation selon la revendication 6,
**caractérisée en ce que**
l'installation comprend des échangeurs de chaleur [K1, 2 ...] et des pompes [P1,2 ...].
